# EUROPÄISCHE PATENTSCHRIFT

(11) **EP 0 691 007 B1**
(45) Veröffentlichungstag und Bekanntmachung des Hinweises auf die Patenterteilung: **27.11.1996**
(21) Anmeldenummer: 93905207.2
(22) Anmeldetag: 22.03.1993
(51) Int. Cl.: G06F 9/46

(54) **WIEDEREINTRITTSFÄHIGE BIBLIOTHEKEN**
REENTRANT LIBRARIES
BIBLIOTHEQUES RENTRANTES

(43) Veröffentlichungstag der Anmeldung: 10.01.1996
(73) Patentinhaber: Siemens Nixdorf Informationssysteme AG, 33106 Paderborn (DE)
(72) Erfinder: MATTERN, Axel, D-33415 Verl (DE)
(74) Vertreter: Fuchs, Franz-Josef, Dr.-Ing.
(86) Internationale Anmeldenummer: DE9300256
(87) Internationale Veröffentlichungsnummer: WO9422080

(56) Entgegenhaltungen:
- EP-A- 0 416 768
- IBM TECHNICAL DISCLOSURE BULLETIN Bd. 34, Nr. 4B, September 1991, NEW YORK US Seiten 246 - 257 'Semaphore Architecture for Multi-Threaded Multi-Masking Operating Systems'

## Beschreibung

Die vorliegende Anmeldung betrifft den Betrieb von Rechenanlagen mit mehreren Prozessoren und gemeinsamen Speicher.

Um mehrere Prozessoren mit gemeinsamem Speicher auszunutzen, werden Betriebssysteme verwendet, die mehrere logische Aufgaben gleichzeitig bearbeiten können, indem sie eine Prozesssteuerung zur Verfügung stellen. Bei einer bekannten Prozesssteuerung sind die Prozesse weitgehend isoliert, verwenden also insbesondere getrennte, durch das Betriebssystem zugeteilte Speicherbereiche. Das damit erreichbare Maß an Parallelarbeit ist jedoch praktisch nicht ausreichend. Entweder sind nicht ausreichend viele Prozesse gleichzeitig ausführbereit, so daß Prozessoren nicht ausgenutzt werden. Oder, falls die Programme stärker in Prozesse unterteilt werden, relativiert der Aufwand für Prozessumschaltung und - koordination den Nutzen durch Parallelarbeit. Daher wurde eine zusätzliche Parallelsteuerung eingeführt, die mit "Threads" bezeichnet wird und innerhalb eines Prozesses mehrere parallele Ausführungspfade erlaubt, wobei diese Ausführungspfade alle globalen Variablen und den Programmcode gemeinsam benutzen. Eine Beschreibung befindet sich im Kapitel 6 ("Programming with Threads") des DCE Application Development Guide der Open Software Foundation, Cambridge, USA 1991.

Das Dokument EP-A-0 416 768 beschreibt, wie ein Programm mit mehreren Ausführungspfaden für diese Pfade unterschiedliche, initialisierte Datenbereiche verwalten kann, indem ein Modell ("template") während der Übersetzungszeit angelegt und für jeden Ausführungspfad bei dessen Beginn in einen dynamisch allozierten Speicher kopiert wird.

In dem Dokument "Semaphore Architecture for Multi-Treaded Multi-Masking Operating Systems" im IBM Technical Disclosure Bulletin, Bd. 34, Nr. 4B, September 1991, S.246-257, New York, werden verschiedene Lösungen für Semaphore-Mechanismen unter dem Betriebssystem OS/2 vorgeschlagen.

Keines dieser Dokumente betrifft das Problem, wie eine vorgegebene, nicht änderbare und nicht mit mehreren Ausführungspfaden verträgliche Bibliothek von Unterprogrammen in eine Bibliothek mit funktionell identischen, jedoch mit mehreren Ausführungspfaden eines Programms verträgliche Variante gewandelt werden kann.

Die Koordination dieser Ausführungspfade ist Aufgabe des Benutzers, der dafür eine Funktionsgruppe der Thread-Komponente benutzt. Dies ist ein als Semaphor bekannter Mechanismus, der im Zusammenhang mit Threads als Mutex bezeichnet wird. Ein Mutex ist ein Schalter mit einem EIN- und einem AUS-Zustand, auf den mehrere Ausführungspfade Zugriff haben. Ein Setzen, d.h. Umschalten in den EIN-Zustand, führt zu einem Wartezustand, wenn der Schalter sich bereits im EIN-Zustand befindet. Der Wartezustand hält an, bis ein anderer Ausführungspfad den Mutex wieder löscht, d.h. den Schalter wieder in den AUS-Zustand bringt. Damit ist der Schutz eines Programmteils möglich, der nur einmal vorhandene Betriebsmittel benutzt. Hierfür wird bei Eintritt in diesen Programmteil der Mutex gesetzt. Damit ist sichergestellt, daß kein anderer Ausführungspfad diesen Programmteil gleichzeitig benutzt. Am Ende wird der Mutex gelöscht und somit eventuell wartenden Ausführungspfaden die Möglichkeit gegeben, nunmehr das Betriebsmittel exklusiv zu benutzen.

Wird eine Threads-Komponente nachträglich hinzugefügt, so sind die dem Benutzerprogramm zu Verfügung gestellten und beispielsweise für das Betriebssystem UNIX in der System V Interface Definition festgelegten Bibliotheks-Unterprogramme nicht mit der Threads-Komponente verträglich. Daher werden unter neuem, wenn auch für den menschlichen Leser ähnlichen Namen, Mantel-Unterprogramme bereitgestellt, die vor dem Aufruf des Original-Bibliotheksunterprogramms einen Mutex benutzen, um diese Aufrufe zu serialisieren. Dies bedeutet jedoch, daß der Quellcode des Benutzerprogramms verändert werden muß, weil die Bibliotheksunterprogramme unter neuem Namen aufgerufen werden müssen.

Zudem werden von Software-Herstellern Subsysteme geliefert, die in Form von Unterprogrammbibliotheken ausgeliefert werden, die ihrereseits die Bibliotheks-Unterprogramme des Betriebssystems benutzen und durch einen Bindevorgang sowohl mit dem Anwenderprogramm als auch mit den Bibliotheks-Unterprogrammen verbunden werden.

Die Erfindung erlaubt es, die ursprünglichen Namen beizubehalten und dennoch die Bibliotheks-Unterprogramme durch Mutex-Aufrufe zu serialisieren.

Hierzu werden zunächst in einem vorbereitenden Schritt die Bibliotheks-Unterprogramme daraufhin untersucht, ob sie verträglich mit Threads sind. Unverträglichkeit liegt beispielsweise bei sequentiellen Dateioperationen vor, weil das Betriebssystem je einen Schreib- und Lesezeiger pro Prozess und Datei, aber nicht pro Thread verwaltet. Hierzu zählen auch die ähnlich einem Dateizugriff organisierten Funktionen für das Empfangen von Nachrichten oder die Annahme von Unterbrechungssignalen. Ein weiterer Fall liegt vor, wenn das Ergebnis in einem statischen Bereich eines Unterprogramms bereitgestellt wird und nur bis zum nächsten Aufruf gültig bleibt; hier könnte der nächste Thread die von dem vorigen Thread noch nicht abschließend ausgewerteten Daten überschreiben. Sowohl die Dateioperationen als auch die statischen Bereiche sind Betriebsmittel im weiteren Sinne.

Diese so ermittelten Unverträglichkeiten dienen nun zum Einordnen der Unterprogramme in Klassen, wobei Unterprogramme aus verschiedenen Klassen keine gemeinsamen Thread-unverträglichen Betriebsmittel besitzen. Damit kann jeder Klasse ein eigenes Sperr- oder Exklusivmittel (MUTEX) zugeordnet werden. Hiermit wird eine Schutzwirkung erreicht, die spezifisch genug ist, um im nachfolgenden Schritt zu erreichen, daß das Anwenderprogramm nur noch geschützte Bibliotheksfunktionen benutzt. Ist nämlich nur ein einziges Exklusivmittel definiert, so wird die Verteilwirkung der Threads auf mehrere Prozessoren aufgehoben, weil häufig nur ein Thread aktiv ist und dieser beispielsweise auf eine Nachricht wartet. Alle anderen Threads laufen dann nur noch bis zu dem Zeitpunkt, wo sie einen Bibliotheks-Unterprogramm aufrufen.

Nach den Vorbereitungen kann jetzt eine geschützte Kopie der betroffenen Bibliothek erzeugt werden. Hierzu werden zunächst alle betroffenen Unterprogramme umbenannt, vorzugsweise in einen aus dem ursprünglichen Namen durch einen Vorsatz wie "O_" abgeleiteten Namen. Aus "date" wird also "O_date". Diese Operation kann entweder auf den Quellen der Bibliotheks-Unterprogramme erfolgen oder durch ein Programm, das die Bibliothek und die darin gespeicherten Objekte modifiziert. Anschließend wird die Bibliothek durch Mantel-Unterprogramme ergänzt. Diese stellen zunächst den ursprünglichen Namen (im Beispiel "date") bereit und rufen ihrerseits das ursprüngliche Bibliotheks-Unterprogramm unter dem neuen Namen (im Beispiel "O_date") auf. Zusätzlich wird vor diesem Aufruf über die Threads-Komponente ein MUTEX gesetzt und nach diesem Aufruf gelöscht.

Diese so erzeugte Bibliothek kann von dem Anwender, der ein Anwenderprogramm in Objektformat hat, anstelle der ursprünglichen verwendet werden und ist dennoch ohne weitere Maßnahmen Threads-verträglich. Diese Notwendigkeit tritt, wie schon erwähnt, auf, wenn zum einen das Anwenderprogramm Unterprogrammbibliotheken verwendet, ohne dafür Quellen zu besitzen, diese jedoch ihrerseits die System-Bibliotheken benutzen, wie bei einer Datenbank-Komponente. Ohne die angegebenen Lösung könnte das Anwenderprogramm die Threads-Komponente nicht benutzten.

Ein maximal reduziertes Beispiel für ein Hauptprogramm lautet:

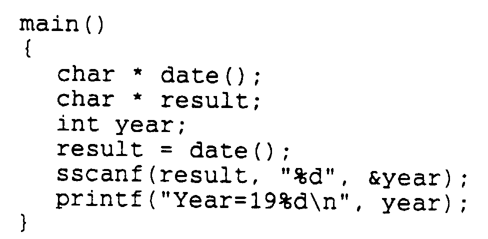

Die entsprechende Mantelprozedur lautet:

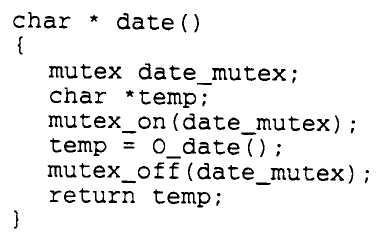

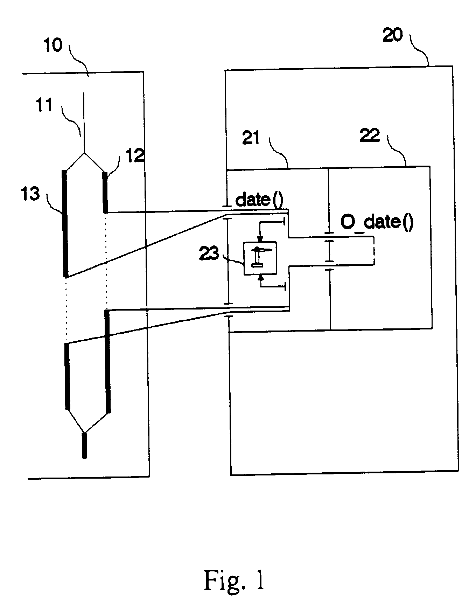

Das Ergebnis ist in Fig. 1 graphisch dargestellt: Ein Hauptprogramm 10 benutzt die Bibliothek 20. Der Kontrollfluß 11 ist in die beiden Threads 12 und 13 aufgespalten, die zu unterschiedlichen Zeitpunkten das Unterprogramm "date()" aufrufen. Durch den Bindevorgang wird damit das Mantel-Unterprogramm 21 aufgrufen, das zunächst den Mutex 23 setzt und dann durch Aufruf von "O_date()" das ursprüngliche Unterprogramm 22 aufruft. Nach Rückkehr aus diesem wird der Mutex 23 gelöscht und zu dem verlassenen Thread 12 bzw. 13 zurückgekehrt.

## Patentansprüche

1. Schutzmittel (21) für Programmcode (10) in einem Datenverarbeitungssystem mit einem oder mehreren Prozessoren und einer Steuerung für mehrere Ausführungspfade (THREADS, 12, 13) innerhalb des bei Ausführung des Programms ablaufenden Prozesses, enthaltend ein Exklusivmittel (23, MUTEX) zur Serialisierung verschiedener Ausführungspfade, mit folgenden Merkmalen:
- Der Programmcode besteht aus einem für die Aufgabe des Programms spezifischen, durch das Schutzmittel nicht veränderbaren Stammteil (22), der die Leistung von über vorgegebene Bezeichner ("date") gekennzeichneten Bibliotheksunterprogrammen verwendet.
- Mindestens eines der durch vorgegebene Bezeichner gekennzeichneten Bibliotheks-Unterprogramme benutzt ein Betriebsmittel in einer mit mehreren Ausführungspfaden unverträglichen Art.
- Das Schutzmittel besteht aus einer Bibliothek (22), die die unverträglichen, zu schützenden Bibliotheks-Unterprogramme mit lediglich verändertem Namen ("O_date") und für jedes zu schützende Bibliotheks-Unterprogramm ein Mantel-Unterprogramm (21) enthält, welches den von dem Stammteil verwendeten Namen ("date") besitzt, das Exklusivmittel (23, MUTEX) zur Serialisierung von Ausführungspfaden anwendet, und das ursprüngliche Bibliotheks-Unterprogramm über den veränderten Namen ("O_date") zur Erbringung der Leistung aufruft.

2. Schutzmittel nach Anspruch 1, wobei die zu schützenden Bibliotheks-Unterprogramme nach verwendeten, mit mehreren Ausführungspfaden unverträglichen Betriebsmitteln geordnet werden, in Klassen mit jeweils paarweise unterschiedlichen Betriebsmitteln dieser Art eingeteilt werden, und jeder Klasse ein eigenes Exklusivmittel zur Benutzung durch die Mantelprogramme zugeordnet wird.

3. Herstellung eines ausführbaren Anwenderprogramms (10) in einem Datenverarbeitungssystem mit einem oder mehreren Prozessoren und einer Steuerung für mehrere Ausführungspfade (THREADS, 12, 13) innerhalb des bei Ausführung des Programms ablaufenden Prozesses, enthaltend ein Exklusivmittel (MUTEX, 23) zur Serialisierung verschiedener Ausführungspfade (12, 13), mit folgenden Merkmalen:
- Das Anwenderprogramm (10) liegt in Objektcode vor und kennzeichnet die Bibliotheksfunktionen durch vorbestimmte Bezeichner ("date").
- Mindestens eines der durch vorbestimmte Bezeichner ("date") gekennzeichneten Bibliotheksfunktionen (22) benutzt Betriebsmittel in einer mit mehreren Ausführungspfaden unverträglichen Art und ist zu schützen.
- Einmaliges Herstellen einer geschützten Bibliothek (20), die die unverträglichen, zu schützenden Bibliotheks-Unterprogramme mit lediglich verändertem Namen ("O_date") und für jedes zu schützende Bibliotheks-Unterprogramm ein Mantel-Unterprogramm (21) enthält, welches den von dem Stammteil verwendeten Namen ("date") besitzt, das Exklusivmittel (MUTEX, 23) zur Serialisierung von Ausführungspfaden (12, 13) anwendet, und das ursprüngliche Bibliotheks-Unterprogramm über den veränderten Namen ("O_date") zur Erbringung der Leistung aufruft.
- Bindevorgang des Objektcodes des Anwenderprogramms (10) mit der geschützten Bibliothek (20) oder auch weiteren, nicht zu schützenden Bibliotheken.

## Claims

1. Protective means (21) for program code (10) in a data processing system having one or more processors and a control for a number of execution paths (THREADS, 12, 13) within the process running upon execution of the program, containing an exclusive means (23, MUTEX) for serializing various execution paths, with the following features:
- The program code comprises a root part (22), which is specific to the task of the program, cannot be altered by the protective means and uses the function of library subroutines marked by means of predetermined identifiers ("date").
- At least one of the library subroutines marked by predetermined identifiers uses an operating means of a type incompatible with a number of execution paths.
- The protective means comprises a library (22) which contains the incompatible library subroutines, to be protected, with merely altered name ("O_date") and, for each library subroutine to be protected, a shell subroutine (21) which has the name ("date") used by the root part, uses the exclusive means (23, MUTEX) for serializing execution paths and calls up the original library subroutine using the altered name ("O_date") to enact the function.

2. Protective means according to Claim 1, the library subroutines to be protected being classified according to operating means used which are incompatible with a number of execution paths and divided into classes having in each case pairs of different operating means of this type, and each class is assigned a dedicated exclusive means for use by the shell subroutines.

3. Creation of an executable user program (10) in a data processing system having one or more processors and a control for a number of execution paths (THREADS, 12, 13) within the process running upon execution of the program, containing an exclusive means (MUTEX, 23) for serializing various execution paths (12, 13), with the following features:
- The user program (10) is in object code and marks the library functions by predetermined identifiers ("date").
- At least one of the library functions (22) marked by predetermined identifiers ("date") uses operating means of a type incompatible with a number of execution paths and is to be protected.
- Creating on just a single occasion a protected library (20) which contains the incompatible library subroutines, to be protected, with merely altered name ("O_date") and, for each library subroutine to be protected, a shell subroutine (21) which has the name ("date") used by the root part, uses the exclusive means (MUTEX, 23) for serializing execution paths (12, 13) and calls up the original library subroutine using the altered name ("O_date") to enact the function.
- Linking operation of the object code of the user program (10) with the protected library (20) or else further libraries, not to be protected.

## Revendications

1. Moyen de protection (21) des codes de programme (10) dans un système de traitement de données, comportant un ou plusieurs processeurs et une commande pour plusieurs voies d'exécution (THREADS, 12, 13) au sein du processus se déroulant lors de l'exécution du programme, qui contient un moyen exclusif (23, MUTEX) destiné à sérier différentes voies d'exécution, présentant les particularités ci-après :
- Le code de programme est constitué d'une partie de base (22) spécifique à la fonction du programme, qui ne peut pas être modifiée par le moyen de protection et qui utilise la puissance de sous-programmes de bibliothèque caractérisés par des indicateurs prédéterminés ("date").
- L'un au moins des sous-programmes de bibliothèque caractérisé par des indicateurs prédéterminés utilise un moyen opératoire d'une manière non compatible avec plusieurs voies d'exécution.
- Le moyen de protection est constitué d'une bibliothèque (22), qui contient les sous-programmes de bibliothèque incompatibles à protéger avec uniquement un nom modifié ("O_date") et un sous-programme enveloppe (21) pour chaque sous-programme de bibliothèque à protéger, qui possède le nom ("date") utilisé par la partie de base, qui applique le moyen exclusif (23, MUTEX) pour sérier des voies d'exécution, et qui appelle le sous-programme de bibliothèque d'origine par l'intermédiaire du nom modifié ("O_date") pour l'exécution de la prestation.

2. Moyen de protection selon la revendication 1, dans lequel les sous-programmes de bibliothèque à protéger sont classés en fonction de moyens opératoires utilisés qui sont incompatibles avec plusieurs voies d'exécution, en classes comportant différents moyens opératoires de ce type qui sont répartis en couples respectifs, et un moyen exclusif étant associé à chaque classe pour une utilisation par les programmes enveloppe.

3. Réalisation d'un programme d'utilisateur (10) pouvant être exécuté dans un système de traitement de données, comportant un ou plusieurs processeurs et une commande pour plusieurs voies d'exécution (THREADS, 12, 13) au sein du processus se déroulant lors de l'exécution du programme, qui contient un moyen exclusif (MUTEX, 23) destiné à sérier plusieurs voies d'exécution (12, 13), présentant les particularités ci-après :
- Le programme d'utilisateur (10) est disponible sous la forme de codes d'objets et caractérise les fonctions de bibliothèque par des indicateurs prédéterminés ("date").
- L'une au moins des fonctions de bibliothèque (22) caractérisée par des indicateurs prédéterminés ("date") utilise des moyens opératoires d'une manière qui est incompatible avec plusieurs voies d'exécution, et est à protéger.
- Réalisation unique d'une bibliothèque protégée (20), qui contient les sous-programmes de bibliothèque incompatibles à protéger avec uniquement un nom modifié ("O_date") et un sous-programme enveloppe (21) pour chaque sous-programme de bibliothèque à protéger, lequel possède le nom ("date") utilisé par la partie de base, qui applique le moyen exclusif (MUTEX, 23) pour sérier des voies d'exécution (12, 13), et qui appelle le sous-programme de bibliothèque d'origine par l'intermédiaire du nom modifié ("O_date") pour l'exécution de la prestation.
- Un processus de liaison du code d'objet du programme d'utilisateur (10) avec la bibliothèque protégée (20), ou également avec d'autres bibliothèques qui ne sont pas à protéger.
